(19)

**Europäisches Patentamt**

**European Patent Office**

**Office européen des brevets**

(11) **EP 4 563 812 A1**

(12) **EUROPEAN PATENT APPLICATION**

(43) Date of publication:
**04.06.2025  Bulletin 2025/23**

(21) Application number: **23383228.6**

(22) Date of filing: **29.11.2023**

(51) International Patent Classification (IPC):
**F03D 7/02** *(2006.01)*          **F03D 7/04** *(2006.01)*

(52) Cooperative Patent Classification (CPC):
**F03D 7/0204; F03D 7/043;** F05B 2270/329

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Nordex Energy SE & Co. KG**
  **22419 Hamburg (ES)**
• **Nordex Energy Spain, S.A.U.**
  **31395 Barasoain (Navarra) (ES)**

(72) Inventors:
• **Gil, Pablo**
  **31395 BARASOAIN (ES)**
• **Gellermann, Jan**
  **18057 Rostock (DE)**
• **Manitz, Jan Erik**
  **18057 Rostock (DE)**

(74) Representative: **Völkl Siebenson Patentanwälte -
Partnerschaft mbB
Baaderstraße 13
80469 München (DE)**

(54) **METHOD FOR OPERATING A WIND TURBINE AND WIND TURBINE**

(57)      The method is for operating a wind turbine (100) having a rotatable component (1 to 4) and at least one drive (di) for rotating the rotatable component by exerting torque. The method comprises a step of providing first information (I1) which is representative of the actual position (P_a) of the rotatable component. In a further step, second information (I2) is provided which is representative of a target position (P_t) of the rotatable component. Then, third information (I3) is determined depending on the first and the second information. The third information is representative of a target trajectory (T_t) for the rotation of the rotatable component from the actual position to the target position using a trajectory generator. In a further step, an operating setpoint (OS_i) for the at least one drive is determined depending on the third information such that, when the at least one drive is operated according to the operating setpoint, the drive exerts torque onto the rotatable component so that it starts to follow the determined target trajectory.

Fig. 6

**EP 4 563 812 A1**

**Description**

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the nacelle or the rotor blades, need to be rotated during operation. Control of the rotation such that the rotatable component reaches the desired rotational position quickly and reliably is desired.

One object to be achieved is to provide a method which contributes to a fast and reliable position control. Further objects to be achieved are to provide a computer program, a computer-readable data carrier, a control system and a wind turbine for executing such a method.

First, the method for operating a wind turbine is specified.

According to an embodiment, the method is for operating a wind turbine having a rotatable component and at least one drive for rotating the rotatable component by exerting torque. The method comprises a step of providing first information which is representative of the actual position of the rotatable component. In a further step, second information is provided which is representative of a target position of the rotatable component. Then, third information is determined depending on the first and the second information. The third information is representative of a target trajectory for the rotation of the rotatable component from the actual position to the target position using a trajectory generator. In a further step, an operating setpoint for the at least one drive is determined depending on the third information such that, when the at least one drive is operated according to the operating setpoint, the drive exerts torque onto the rotatable component so that it starts to follow the determined target trajectory.

The present invention is, inter alia, based on the idea to provide a method for operating a wind turbine which enables a fast and reliable rotation of the rotatable component to a desired position. A trajectory generator turned out to be a suitable measure for reaching this goal. Indeed, a trajectory generator enables the shortest and/or fastest trajectory under certain constraints, like a maximum allowed jerk and/or a maximum allowed acceleration and/or a maximum allowed velocity, to be found. Thus, an optimum trajectory for rotating the rotatable component can be found under the constraint that the at least one drive is not overloaded. In other words: operating the drive according to the determined trajectory protects the drive but, at the same time, optimizes the position change of the rotatable component.

The method specified herein is, in particular, a computer implemented method, i.e. is performed with the help of a computer or a processor.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

The drive may comprise an electric motor. Moreover, the drive may comprise a gearbox and a pinion. The electric motor applies an input rotational speed and an input torque to the gearbox, which is transformed thereby to an output rotational speed and an output torque and is applied to the pinion. By way of example, the transmission ratio between the input rotational speed and the output rotational speed of the gearbox of each drive is at least 100 or at least 1000. That is, on one side of the gearbox the electric motor rotates at least 100 or at least 1000 times faster than the pinion on the other side of the gearbox.

The drive may be attached to the rotatable component so that it rotates together with the rotatable component. For example, the drive then meshes with and exerts torque to a non-rotatable element which in turn may cause the rotation of the rotatable component. Alternatively, the drive is rotationally fixed and does not rotate together with the rotational component. The drive may then mesh with and may exert torque to the rotatable component, which can cause its rotation.

The wind turbine may comprise two or more drives, e.g. at least four drives or at least six drives, for rotating the rotatable component. All features disclosed herein for one drive are also disclosed for all other drives.

The first information is representative of the actual position of the rotatable component. The first information may be determined depending on measurements. For example, the measurements are taken with the help of an incremental encoder.

The second information is representative of a target position of the rotatable component. The target position may be a position which the rotatable component shall finally occupy or a position towards which the rotatable component shall rotate. Particularly, it is a position which is different from the actual position.

The first information and the second information which are used for determining the third information are, in particular, representative for the same moment in time. For example, the actual position is the position of the rotatable component at the moment the second information is provided or immediately before or after the moment at which the second information is provided, e.g. at most one second earlier or later.

The third information is representative of the target trajectory of the rotatable component. The target trajectory is a trajectory which the rotatable component shall follow in order to rotate from the actual position to or towards the target position. This target trajectory defines the rotational position as a function of time. The actual position which is used for determining the third information, i.e. the target trajectory, can also be referred to as "start position".

Herein, since the rotatable component is rotated, quantities like "position", "speed" or "velocity", "acceleration" and "jerk" refer to the respective rotational quantities, i.e. "rotational position", "rotational velocity" or "rotational speed", "rotational acceleration" and "rotational jerk".

The target trajectory is determined using a trajectory generator, also called "profile generator". Different kind of trajectory generators are conceivable, like a polynomial trajectory generator or a harmonic trajectory generator or a cycloidal trajectory generator or an elliptic trajectory generator or an exponential trajectory generator or a trajectory generator based on Fourier series expansion.

The operating setpoint for the drive is determined depending on the third information. Particularly, an operating setpoint is determined for each drive, wherein the operating setpoint assigned to a drive defines the operation of that drive. For each drive, the corresponding operating setpoint may be, or may be representative of, a current setpoint or a torque setpoint.

A setpoint herein defines a certain target to be achieved when operating the wind turbine. The operating setpoint defines the target operation of a drive. An operating setpoint for a drive is, in particular, equivalent to control/operation information for the drive.

The operating setpoint is determined such that, when the drive is operated according to the operating setpoint, the drive exerts torque onto the rotatable component so that the rotatable component starts to follow the determined target trajectory. In other words, the operating setpoint is configured to cause an operation of the drive such that the at least one drive brings the rotatable component from the actual position onto the target trajectory. This means, for example, that the at least one drive is operated such that the difference between the actual trajectory of the rotatable component and the target trajectory is minimized.

According to a further embodiment, the trajectory generator is a polynomial point-to-point trajectory generator. The polynomial point-to-point trajectory generator solves general equations of motion to calculate the fastest movement between two points, e.g. the actual position and the target position, based on given constraints, like a given maximum allowed speed. It is called "polynomial trajectory generator" because the position as a function of time is a polynomial of the time.

According to a further embodiment, the polynomial point-to-point trajectory generator is of at least third order. For example, constraints for the maximum allowed speed, the maximum allowed acceleration and the maximum allowed jerk are defined in the trajectory generator.

In other words, the equations of motion which are solved in order to determine the target trajectory comprise equations of third order in time or even higher orders. In the case that the trajectory generator is of third order, the equations of motion are, for example:

$$j(t) = j_{max}, -j_{max} \; or \; 0$$

$$a(t) = a_0 + j(t) \cdot t$$

$$v(t) = v_0 + a_0 \cdot t + j(t)\frac{t^2}{2}$$

$$p(t) = p_0 + v_0 \cdot t + a_0\frac{t^2}{2} + j(t)\frac{t^3}{2}$$

Here, j(t) is the jerk as a function of time with j_max and -j_max being constant values of the jerk, namely the maximum allowed values of the jerk. a(t) is the acceleration as a function of time with a_0 being the acceleration at t=0. v(t) is the velocity or speed, respectively, as a function of time with v_0 being the speed at t=0. p(t) is the position as a function of time, with p_0 being the position at t=0. p_0 is, for example, the actual position of the first information.

By defining the target position, maximum allowed values for the speed, the acceleration and the jerk, the trajectory can be determined unambiguously. For example, different time intervals of increasing acceleration, constant acceleration, decreasing acceleration and constant velocity can be determined. A target trajectory may comprise: a first time interval t1 of increasing acceleration (acceleration has positive sign) with the jerk being j_max. The first time interval t1 may be followed by a second time interval t2 of constant acceleration, namely the maximum allowed acceleration. The second time interval t2 may be followed by a third time interval t3 of decreasing acceleration with the jerk being -j_max. The third time interval t3 may be followed by a fourth time interval t4 of zero acceleration and a velocity being the maximum allowed velocity. The fourth time interval t4 may be followed by a fifth time interval t5, with decreasing acceleration (acceleration has negative sign) and the jerk being -j_max. The fifth time interval t5 may be followed by a sixth time interval t6, in which the acceleration is constant with the absolute value of the acceleration being the maximum allowed acceleration. The sixth time interval t6 may be followed by a seventh time interval t7 in which the acceleration increases again until it is zero and the jerk is j_max during this time interval.

According to a further embodiment, the target position is a position sufficiently far away from the actual position of the rotatable component that the determined target trajectory reaches the maximum allowed speed defined in the trajectory generator and within the target trajectory. In other words, the solution of the equations of motion under the set constraints results in a time interval in which the rotatable component is rotated with the maximum allowed rotational speed. In order to achieve this, the target position has to be sufficiently far away from the actual position. For example, the target position is determined to be the actual position $\pm$ an offset value. The offset value is, for example, at least 360° or least 1000° or at least 2000°. Particularly, the target position is determined to be a position which doesn't actually have to be reached, but which only ensures that the maximum allowed speed is reached in the calculated target trajectory.

By way of example, when executing the method for operating a wind turbine, a GO-signal is repeatedly or continuously provided. The first time the GO-signal is provided, the target position is determined to be the actual position plus or minus the offset value. In this way, the rotatable component can be set in clockwise or counterclockwise rotation according to the determined target trajectory.

According to a further embodiment, the first information is provided repeatedly or continuously. For example, the first information is provided at least every second or at least every half a second. In this case, the first information may also be representative of the moment in time corresponding to the actual position, e.g. the moment in time in which the actual position or the first information, respectively, is provided or determined. On the other hand, the third information could only be determined once, namely depending on the first information provided for the first time, i.e. depending on the first information which is representative of the start position.

According to a further embodiment, the method further comprises a step of providing fourth information which is representative of a stop command. For example, the fourth information is representative of a stop of the GO-signal. For example, the fourth information is representative of the interruption or a longer absence of the GO-signal. Particularly, the fourth information is also representative of the moment in time of the provision of the stop command or the fourth information, respectively.

According to a further embodiment, the method comprises a step of determining fifth information depending on the first and the fourth information, wherein the fifth information is representative of the shortest trajectory for the rotation of the rotatable component from its actual position at the moment of provision of the stop command or the fourth information, respectively, to standstill using a trajectory generator. The same trajectory generator as used for determining the target trajectory may be used.

The actual position of the rotatable component at the moment of provision of the stop command / the fourth information may be extracted from the first information in case it is repeatedly or continuously provided.

Additionally or alternatively, it may be extracted from the determined target trajectory.

The shortest trajectory herein means the shortest trajectory under consideration of the constraints set in the trajectory generator. For determining the shortest trajectory, the actual speed, the actual acceleration and the actual jerk of the rotatable component at the moment of provision of the stop command of the fourth information may be considered so that there is a smooth or continuous transition in speed, acceleration and jerk when switching from the target trajectory to the shortest trajectory. The actual speed and/or the actual acceleration and/or the actual jerk may be extracted from measurements of these quantities or from the determined target trajectory.

According to a further embodiment, the method further comprises newly determining the operating setpoint for the at least one drive depending on the fifth information such that, when the at least one drive is operated according to the newly determined operating setpoint, herein also called "new operating setpoint", the drive exerts torque onto the rotatable component so that it starts to follow the determined shortest trajectory. In other words, the operation of the at least one drive according to the new operating setpoint no longer results in the rotatable component following the target trajectory but results in the rotatable component following the shortest trajectory. The operating setpoint related to the target trajectory is, so to speak, overwritten by the newly determined operating setpoint.

According to a further embodiment, the rotatable component is a component of a yaw system of the wind turbine. For example, the rotatable component is a nacelle of the wind turbine or a carrier for a nacelle or a yaw bearing.

According to a further embodiment, the method further comprises providing sixth information which is representative of the actual wind direction at the wind turbine. The sixth information may be determined with the help of measurements. The measurements are, for example, taken by a sensor.

According to a further embodiment, the steps of providing the second information and determining the third information as well as determining the operating setpoint are started depending on a comparison between the first information and the sixth information which reveals that the position of the rotatable component is not compatible with the wind direction. The comparison may be done with the help of a wind alignment controller. "Is not compatible" means, for example, that the rotational position of the rotatable component is not optimal in view of power generation of the wind turbine. "Is not compatible" means, in particular, that the wind direction and the rotatable component, e.g. the nacelle, are not aligned. Accordingly, "is compatible" means that the wind direction and the rotatable component are aligned.

Comparing the first and sixth information in order to find out whether the position of the rotatable component is compatible or matches with the wind direction can be done in different ways. For example, the first and the sixth information are averaged over a certain time interval. If the averaged actual position lies within a certain angular range around the averaged wind direction, the position of the rotatable component is considered to be compatible with the wind direction. If the averaged actual position lies outside this angular range, the actual position is considered to be not compatible with the actual wind direction. Alternatively, it may be determined whether, on average, i.e. averaged over the certain time interval, the actual position lies outside the certain angular range around the actual wind direction. If this is the case, the position of the rotatable component is not compatible with the wind direction. Otherwise, it is compatible with the wind direction. The certain angular range is, for example, a range of $\pm 4°$ around the optimal position. The certain time interval can be a time interval of at least 5 s or at least 0.5 minutes or at least 1 minute, for example.

By way of example, when the comparison between the first and the sixth information reveals that the position of the rotatable component is not compatible with the wind direction, the execution of the steps of providing the second information and determining the third information as well as determining the operating setpoint are started immediately. E.g. with a delay of at most 10 s or at most 1 s.

For example, when it is determined that the position of the rotatable component is not compatible with the wind direction, the GO-signal is provided.

The provision of the sixth information may be done repeatedly or continuously so that a comparison can be done repeatedly or continuously. The GO-signal may be provided as long as this comparison reveals that that the position of the rotatable component is not compatible with the wind direction.

According to a further embodiment, the step of providing the fourth information and determining the fifth information as well as newly determining the operating setpoint is started depending on a comparison between the first and the sixth information which reveals that the position of the rotatable component is compatible or matches with the wind direction, e.g. immediately thereafter, i.e. with a delay of at most 10 s or at most 1 s, for example. For example, when the comparison reveals that the position is compatible or matches with the wind direction, the provision of the GO-signal is stopped. The stopping of the GO-signal is equivalent to the provision of a stop command and, accordingly, the fifth information is determined and, depending thereon, the new operating setpoint is determined.

According to a further embodiment, the method further comprises a step of providing seventh information which is representative of a position setpoint of the rotatable component.

According to a further embodiment, the operating setpoint and/or the new operating setpoint are determined also depending on the seventh information. For example, this is done by using a feedback loop, particularly a negative feedback loop, with the first and the seventh information as input information so that the difference between the actual position and the position setpoint is minimized. Particularly, the first and the seventh information are repeatedly or continuously provided and compared. Depending on this, the operating setpoint or the new operating setpoint, respectively, is repeatedly or continuously determined or adjusted, respectively, in order to make the actual position to match the position setpoint.

The feedback loop may be realized with the help of a controller, herein also referred to as "position controller". Depending on the deviation between the actual position and the position setpoint, the position controller determines an actuating variable, wherein the (new) operating setpoint may be determined depending on this actuating variable. The actuating variable is, for example, a rotational speed setpoint.

According to a further embodiment, the position setpoint is repeatedly or continuously changed according to the determined target trajectory. In other words, the seventh information is repeatedly or continuously provided. Thereby, the position setpoint is repeatedly or continuously changed. For example, the position setpoint is repeatedly or continuously changed such that it is the position the rotatable component should have according to the target trajectory. When the new operating setpoint is determined, the position setpoint is repeatedly or continuously changed according to the determined shortest trajectory.

When using the feedback loop, the (new) operating setpoint is also determined repeatedly or continuously depending on the current first and seventh information. In this way, the feedback loop can be used to make the rotatable component to indeed follow the target trajectory or the shortest trajectory, respectively.

According to a further embodiment, gain control is used for the minimization of the difference between the actual position and the position setpoint. The gain control is a pure proportional gain control or comprises a contribution of proportional gain control. For example, proportional-integral gain control may be used for the minimization. In other words, the position controller comprises a proportional term. The position controller may be a proportional controller or a proportional-integral controller, for example.

According to a further embodiment, the method comprises switching from the first operation mode in which the operating setpoint (or the new operating setpoint) is determined depending on the third information (or the fifth information) into a second operation mode in which the operating setpoint is determined directly from the first and second information using the gain control. That is, no target trajectory or shortest trajectory is determined. Rather, the position setpoint is set to be the target position from the moment the second information is provided. Thus, the position setpoint remains a constant until the rotatable component reaches the position setpoint. The continuous or repeated adaption of the position setpoint is not applied in this case.

For example, in the second operation mode, the target position is an actually desired position for the rotatable component. It may be predetermined depending on the sixth information. Particularly, in the case of the second operation mode, the target position has a value which is the actual position ± less than 360°.

When switching from the first operation mode to the second operation mode and/or vice versa, the actual position and/or the actual speeds of the rotatable component may be redefined. For example, when switching, the actual position and/or the actual speed are newly determined depending on measurements and are then used for the first information for determining the operating setpoint(s) according to the second or first operation mode.

According to a further embodiment, the wind turbine comprises at least two drives for rotating the rotatable component by exerting torques. The method further comprises providing eighth information which is representative of the actual torque difference between the actual torques exerted by the drives. By way of example, the actual electric currents with which the electric motors of the drives are actually operated are determined and these currents are then stored in the eighth information. The actual electric currents may be determined from the electric signals transmitted to the drives by using a motor model. Indeed, the electric current is proportional to the torque so that the difference between the currents of the electric motors is representative of the difference between the torques. Alternatively, it is possible to measure the torques provided by the drives or the torque difference directly and to store these measurements in the eighth information.

According to a further embodiment, the method comprises a step of providing ninth information which is representative of a torque difference setpoint between the torques exerted by the drives. The torque difference setpoint is the target value of the absolute value of the torque difference between the torques of two drives. In the case of more than two drives, the ninth information may be representative of several torque difference setpoints. For example, the torque difference setpoint for each drive then refers to the torque difference between the drive and a master drive.

According to a further embodiment, the operating setpoints for the drives are determined also depending on the eighth and the ninth information, namely by using a feedback loop, particularly a negative feedback loop, with the eighth and the ninth information as input information so that the difference between the torque difference setpoint and the actual torque difference is minimized. Particularly, the eighth and the ninth information are repeatedly or continuously provided and compared. Depending on this, the operating setpoints are repeatedly or continuously determined or adjusted, respectively, in order to make the actual torque difference to match the torque difference setpoint.

Determining the operating setpoints depending on the eighth and the ninth information by using the feedback loop may be realized with the help of a controller, herein also called "tension controller". The tension controller is, for example, a proportional (P-) controller. For example, depending on the deviation between the actual torque difference and the torque difference setpoint, the tension controller determines at least one actuating variable. The operating setpoints may be representative of this actuating variable and/or may be determined depending on this actuating variable. By being operated according to the operating setpoints, the operation of the drives can then be adjusted according to the actuating variable.

According to a further embodiment, the rotatable component is a component of a pitch system of the wind turbine. For example, the rotatable component is a rotor blade of the wind turbine or a carrier for a rotor blade or a pitch bearing.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system. All features disclosed for the method are also disclosed for the control system and vice versa.

The control system may comprise at least one processor and/or at least one programmable logic controller, plc for short. Additionally, the control system may comprise one or more drive control modules which convert the operating setpoint(s) into actual electric signal(s), e.g. PWM signals, with which drive(s) is/are controlled. The control system may be part of the wind turbine.

According to a further embodiment, the control system comprises means, particularly a sensor, with the help of which the actual position of the rotatable component is determinable. For example, the control system comprises an incremental encoder assigned to the rotatable component.

According to a further embodiment, the control system comprises means with the help of which the actual torque difference between the actual torques exerted by the drives is determinable. The means may be current sensors of the one or more drive control modules. As mentioned above, the actual torques or actual torque differences can be derived from the electric currents.

Alternatively, the control system may comprise particular means, like sensors, with the help of which the external load and/or the actual torque difference and/or the actual torques are directly determinable.

According to a further embodiment, the control system further comprises means, particularly a sensor, with the help of which the actual rotational speed of the drive is determinable. There may be such a sensor for each drive. For example, the control system comprises an incremental encoder, particularly one incremental encoder for each drive.

Furthermore, the control system may comprise means for measuring the actual wind direction and/or the actual wind speed. The control system may comprise a wind vane and/or an anemometer.

Next, the wind turbine is specified.

According to an embodiment, the wind turbine comprises at least one rotatable component as well as at least one drive which is configured to rotate the rotatable component by exerting torque. The wind turbine further comprises the control system as specified herein. The control system is signally connectable or signally connected to the drive in order to enable an operation of the drive according to the operating setpoint.

Thus, the wind turbine is, in particular, configured to execute the method according to any of the embodiments described herein. All features disclosed for the method are also disclosed for the wind turbine and vice versa. When the method is executed in the wind turbine, the drive(s) is/are operated according to the operating setpoint(s). The rotatable component is then rotated accordingly and, for example, starts to follow the target trajectory and/or to follow the shortest trajectory.

The rotatable component of the wind turbine may be a component of the yaw system and/or the pitch system, like the nacelle or a nacelle carrier or a rotor blade or a rotor blade carrier.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

Figure 1 shows an exemplary embodiment of the wind turbine,

Figure 2 shows an exemplary embodiment of a yaw system in a perspective view,

Figure 3 shows an exemplary embodiment of a yaw system in a cross-sectional view,

Figure 4 shows an exemplary embodiment of a yaw system in a top view,

Figure 5 shows a flowchart of an exemplary embodiment of the method for operating a wind turbine,

Figure 6 shows different graphs associated with a target trajectory determined using a trajectory generator,

Figure 7 shows a flowchart of another exemplary embodiment of the method for operating a wind turbine,

Figures 8 to 11 show different graphs associated with several trajectories determined by using a trajectory generator,

Figure 12 shows an exemplary embodiment of the control system,

Figure 13 shows an exemplary embodiment of an operation of a drive control module.

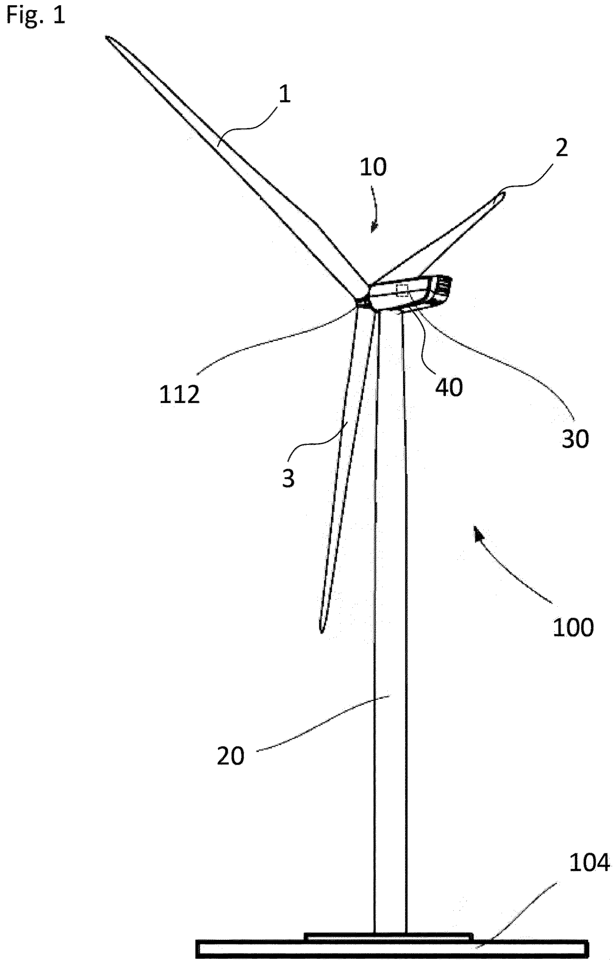

Figure 1 shows a wind turbine 100 which comprises a tower 20. The tower 20 is fixed to the ground by means of a foundation 104. At one end of the tower 20, opposite to the ground, a nacelle 40 is rotatably mounted. The nacelle 40 comprises, for example, a generator which is coupled to a rotor 10 via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades 1, 2, 3 have to be set according to the wind speed. This is done with the help of drives (not shown) which rotate the rotor blades 1, 2, 3 and the nacelle 40 to respective positions. In order to control and operate the drives, the wind turbine comprises a control system 30 which determines operating setpoints with which the drives are operated. The control system 30 is located in the nacelle 40.

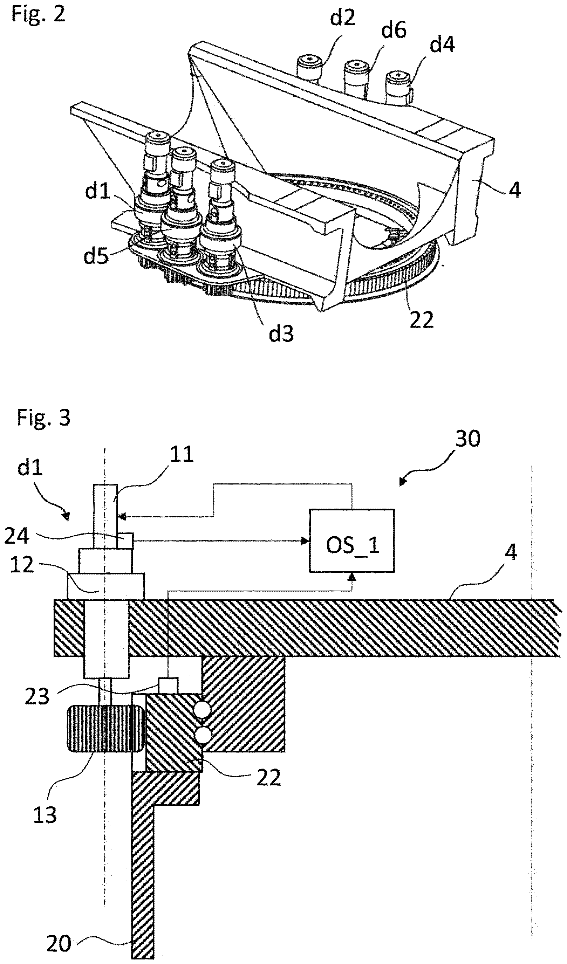

Figure 2 shows a detailed view of an exemplary embodiment of a yaw system, e.g. the yaw system of the wind turbine of figure 1. Here, the nacelle 40 itself is not shown, only the carrier 4 for the nacelle 40. This carrier 4 is rotatable together with the nacelle 40. In order to rotate the carrier 4, six drives d1 to d6 are mounted on the carrier 4. These drives d1 to d6 mesh with a yaw bearing 22 of the yaw system. The yaw bearing 22 is fixed with respect to, for example, the tower 20. The carrier 4 is rotated when the drives d1 to d6 rotate.

Figure 3 shows an exemplary embodiment of the yaw system, e.g. of the yaw system of figure 2, in more detail and in a cross-sectional view. The yaw bearing 22 is mounted on the tower 20. Figure 3 shows only one of the drives, namely drive d1. All other drives may be formed identically. Drive d1 comprises an electric motor 11. The electric motor 11 is operated depending on an operating setpoint $OS\_1$ generated by the control system 30. Depending on the operating setpoint $OS\_1$, drive d1 is rotated and thereby exerts a certain torque. The rotational speed and torque of the electric motor 11 is transmitted to a pinion 13 of the drive d1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are processed by the control system 30. Moreover, another incremental encoder 24 is provided, with the help of which the actual rotational speed of the electric motor 11 of drive d1 is determinable. These measurements are also processed by the control system 30. An individual incremental encoder 24 may be provided for each drive d1 to d6.

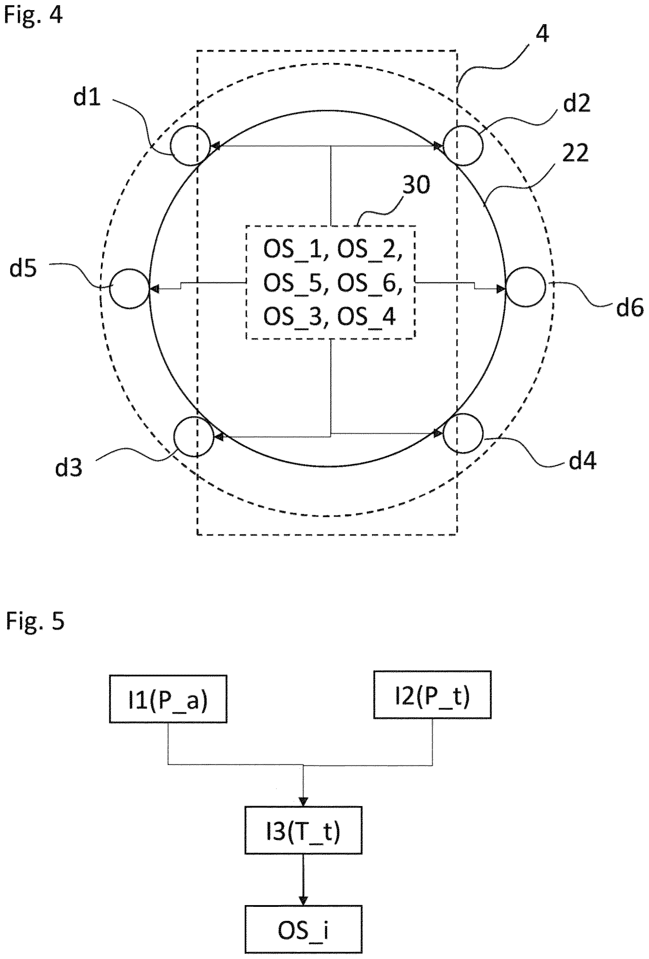

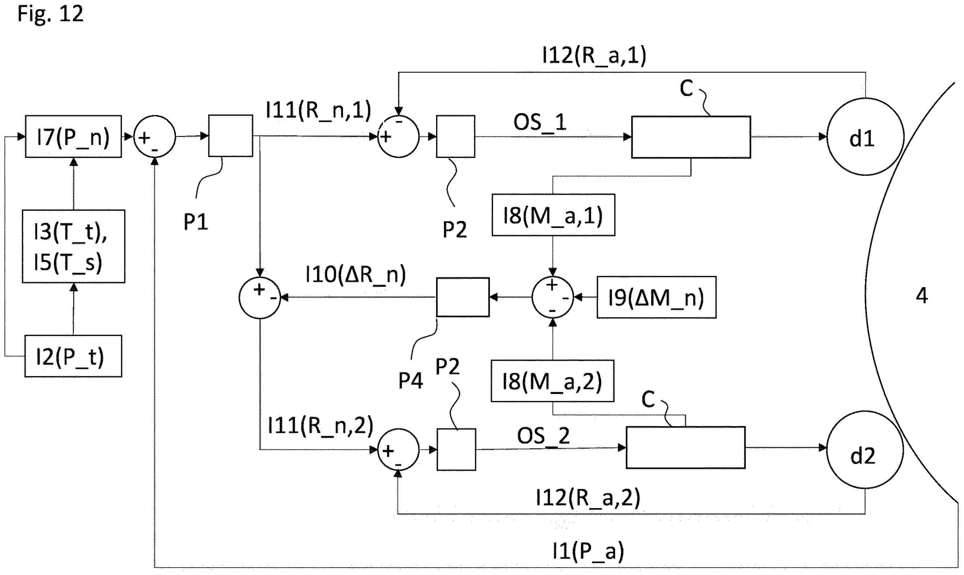

Figure 4 shows an exemplary embodiment of a yaw system, e.g. of the yaw system of figures 2 and 3, in top view. As can be seen here, all six drives d1 to d6 are operated according to corresponding operating setpoints, $OS\_1$ to $OS\_6$, $OS\_i$ for short, determined with the control system 30. The operating setpoints $OS\_i$ may be configured such that different drives d1 to d6, di for short, exert different torques. How this can be achieved is explained in more detail in connection with figure 12.

A possible way to operate the yaw system of figures 2 to 4 is to group the drives into two groups. The left group or first group, respectively, comprises drives d1, d3 and d5. The right group or second group, respectively, comprises the drives d2, d4 and d6. Drive d1 may be the master drive. The torques exerted by all other drives may be selected depending on the torque exerted by drive d1. For example, drives d3 and d5 are operated such that they always exert the same torque as drive d1. The drives of the right group, i.e. drives d2, d4 and d6, may be operated such that they always exert the same torques, but torques with values which are lower or at most the same as the value of the torque of drive d1. The torques of the left side and of the right side may differ from each other by a torque difference setpoint, e.g. of 10 Nm. Thus, the torques values of drives d2, d4 and d6 are the torques values of drives d1, d3 and d5 minus 10 Nm.

When the position of the carrier 4 should be changed, e.g. in order to rotate the nacelle 40 into the wind, it is desirable that this is done as fast as possible but without overloading the drives di. This can be achieved, for example, with the method for operating a wind turbine described in the following.

Figure 5 shows a first exemplary embodiment of the method for operating a wind turbine based on a flowchart. The method comprises a step of providing first information I1 which is representative of the actual position $P\_a$ of the carrier 4. In a further step, second information I2 is provided which is representative of a target position $P\_t$ of the carrier 4. The target position $P\_t$ may be the position in which the nacelle 40 is aligned with the wind direction.

In a further step, third information is determined depending on the first I1 and the second I2 information. The third information I3 is representative of a target trajectory $T\_t$ for the rotation of the carrier 4 from the actual position $P\_a$ to the target position $P\_t$. The target trajectory $T\_t$ is determined using a trajectory generator. By way of example, a polynomial point-to-point trajectory generator is used. For example, the polynomial point-to-point trajectory generator is a third order point-to-point trajectory generator. The operating setpoints $OS\_i$ for the drives di are then determined depending on the third information I3 such that, when the drives di are operated according to the operating setpoints $OS\_i$, the drives di exert torques onto the carrier 4 so that the carrier 4 starts to follow the target trajectory $T\_t$.

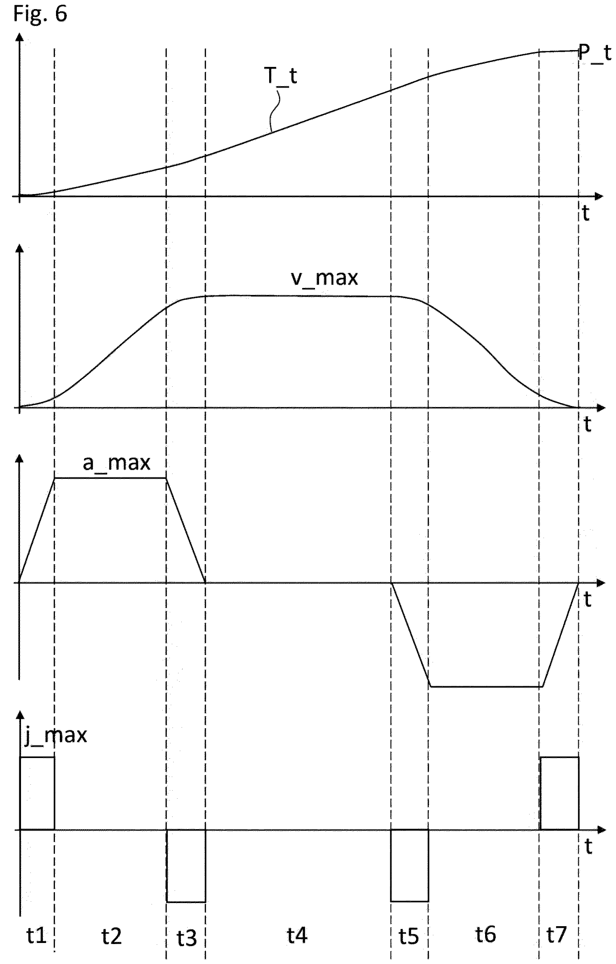

Figure 6 shows different graphs associated with a target trajectory as, for example, determined in the method of figure 5 using the third-order trajectory generator. The upper graph shows the actually determined target trajectory $T\_t$. The corresponding velocity is shown in the graph below. The corresponding acceleration is shown in the second last graph and the corresponding jerk in the last graph. All quantities are shown as a function of time t.

The target trajectory $T\_t$ is determined under consideration of certain constraints, namely a maximum allowed speed $v\_max$, a maximum allowed acceleration $a\_max$ and a maximum allowed jerk $j\_max$. Here, the actual position, i.e. the start position, is set to zero and the target position $P\_t$ is a position away from the actual position.

As can be seen, the target trajectory $T\_t$ has an S-shape. Seven time intervals can be identified in which the carrier 4 is either accelerated (time intervals t1 to t3), moves with constant velocity (time interval t4) or deaccelerated (time intervals t5 to t7). As can be seen, the target position $P\_t$ is sufficiently far away from the actual position / start position that the rotation of the carrier 4 reaches the maximum allowed speed v_max while the maximum allowed acceleration a_max and the maximum allowed jerk j_max are exploited but not exceeded. Indeed, the target trajectory T_t is the fastest way to reach the target position P_t under the set constraints.

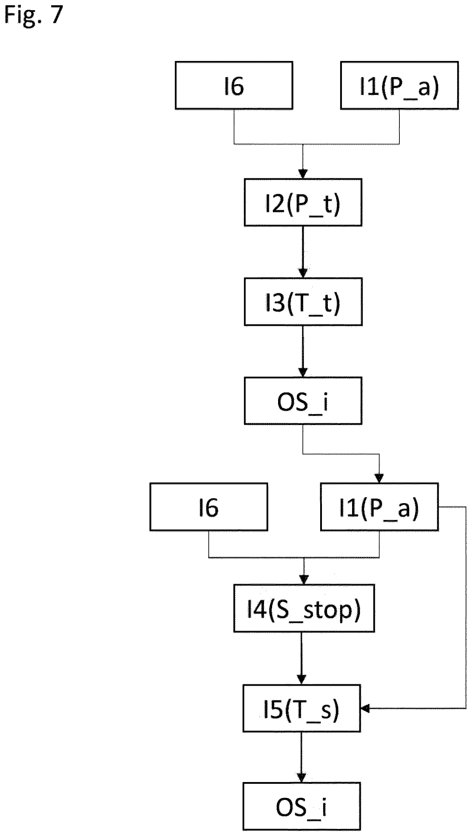

Figure 7 shows a further exemplary embodiment of the method for operating a wind turbine based on a flowchart. Here, sixth information I6 and the first information I1 are provided. The sixth information I6 is representative of the actual wind direction at the location of the wind turbine. If a comparison between the first I1 and the sixth I6 information reveals that the wind direction is not compatible with the position of the first information I1, the steps of providing the second information I2, determining the third information I3 and determining the operating setpoints OS_i are executed. In this case the target position P_t is set to a position that is sufficiently far away from the actual position P_a that, when the carrier 4 follows the target trajectory determined with the help of the trajectory generator, it reaches the maximum allowed speed v_max. For example, the target position P_t is set to be the actual position P_a ± 2000°.

In the present case, the first information I1 is provided repeatedly or continuously also when the drives are already operated according to the operating setpoints OS_i. Likewise, the sixth information I6 is provided continuously or repeatedly. Also the comparison between the wind direction and the actual position P_a is done continuously or repeatedly during the rotation of the carrier 4 along the target trajectory T_t. As soon as a comparison between the sixth I6 and the first I1 information reveals that the position of the rotatable component is compatible with the wind direction, fourth information I4 is provided which is representative of a stop command S_stop. Then, a step is executed in which fifth information I5 is determined which is representative of a shortest trajectory T_s from the actual position of the carrier 4 at the moment of provision of the fourth information I4 to standstill. The trajectory generator is also used for this. The operating setpoints OS_i are then newly determined depending on the fifth information I5 such that, when the drives di are operated according to the new operating setpoints OS_i, the drives di exert torques onto the carrier 4 so that it starts to follow the determined shortest trajectory T_s.

Also here, the shortest trajectory T_s is calculated using the trajectory generator and considering the constraints set in the trajectory generator.

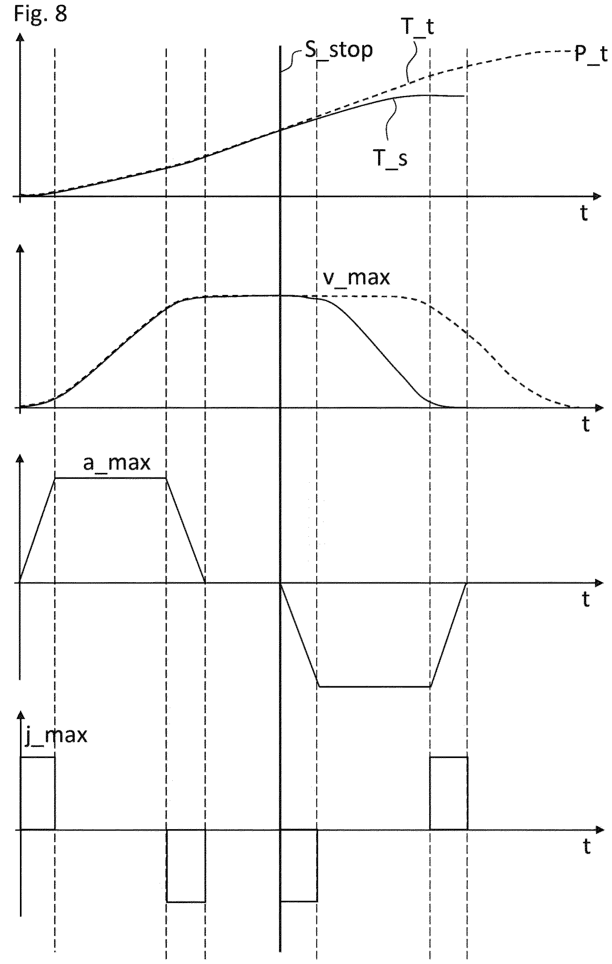

Figures 8 to 11 illustrate actual trajectories determined, for example, in the method according to figure 7. Thereby, the different figures 8 to 11 show the results for different moments when the stop command S_stop is generated. The order of the graphs in each of the figures 8 to 11 is equal to the order of figure 7, i.e. the trajectory is in the upper graph, the corresponding velocity is in the graph below, the corresponding acceleration in the second last graph and the corresponding jerk in the last graph. The dashed lines in the two upper graphs each show the determined target trajectory from the start position / actual position to the target position P_t and the corresponding velocity in the case that the target position P_t is sufficiently far away from the actual position that the maximum allowed speed v_max is reached. The solid lines show the trajectory and corresponding velocity, acceleration and jerk, when the stop command S_stop is provided before the carrier 4 reaches the target position P_t so that the trajectory which the carrier 4 follows switches from the target trajectory to the shortest trajectory T_s.

Figure 8 shows a situation where the stop command S_stop is provided at a moment in time when the carrier 4 rotates with the maximum allowed speed v_max. At the moment of the provision of the stop command S_stop, the shortest trajectory T_s for stopping the carrier 4 is calculated. As can be seen in figure 8, the shortest trajectory T_s also complies with the set constraints, namely the maximum allowed velocity v_max, the maximum allowed acceleration a_max and the maximum allowed jerk j_max.

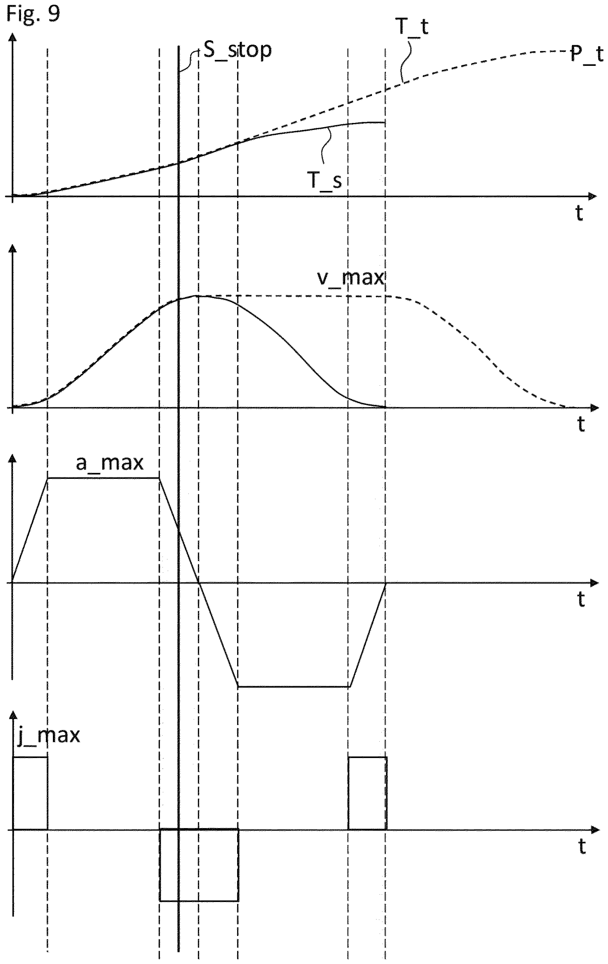

Figure 9 is similar to figure 8, but now the moment at which the stop command S_stop is generated is in the time interval in which the acceleration of the carrier 4 is decreasing towards zero. The shortest trajectory T_s again complies with the set constraints.

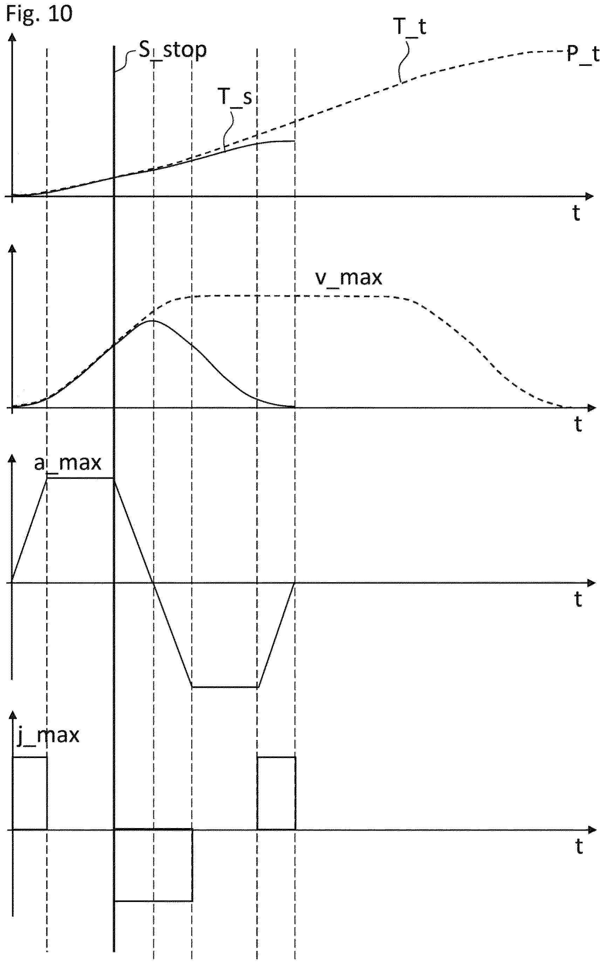

Figure 10 illustrates the situation in which the stop command S_stop is provided at the moment in which the carrier 4 is at constant but maximum allowed acceleration. In this case, the acceleration is immediately decreased towards zero when the stop command S_stop is provided. The calculated shortest trajectory T_s still complies with the set constraints.

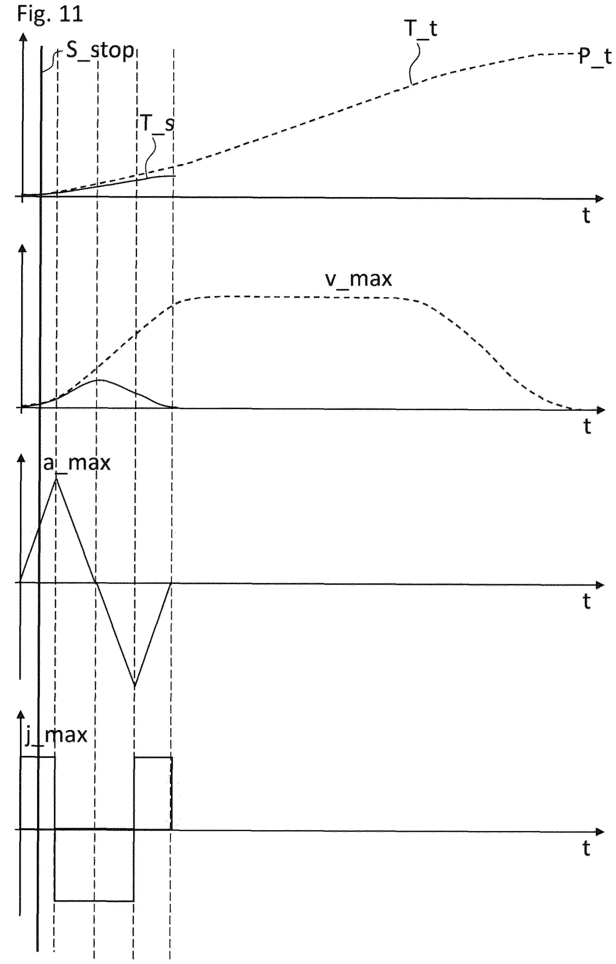

Figure 11 shows the situation in which the stop command S_stop is provided at a moment when the acceleration of the carrier 4 is increasing. In this case, the acceleration is continued until the maximum allowed acceleration is reached and is then immediately decreased. In this way, the shortest trajectory T_s can be made to comply with the set constraints.

Figure 12 shows an exemplary embodiment of the control system with which the described method can be executed. For better illustration, only the drives d1 and d2 are shown.

Particularly, this control system enables the operation of the drives di such that they make the carrier 4 follow the determined trajectories and, at the same time, such that the torque different setpoint is realized.

The second I2 and third I3 information as described before are provided. Then, seventh information I7 is determined depending on the third information I3. The seventh information I7 is representative of a position setpoint P_n of the carrier 4. The position setpoint P_n is repeatedly or continuously changed according to the determined target trajectory T_t or the determined shortest trajectory T_s. In other words, the position setpoint P_n is changed such that it follows the determined trajectory.

Depending on the first information I1 and the

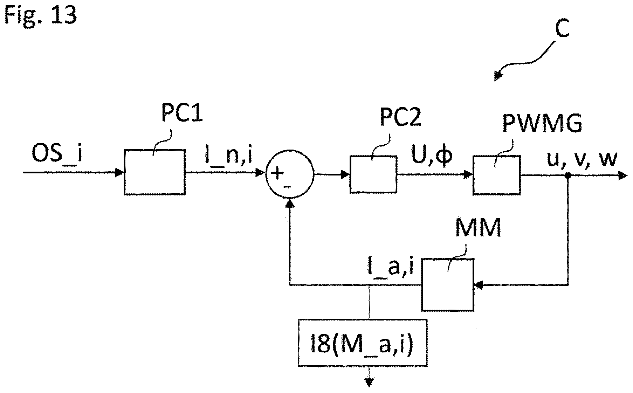

seventh information I7, a position controller P1 determines eleventh information I11. The eleventh information I11 is representative of rotational speed setpoints R_n,1 to R_n,6, R_n,i for short, of the drives di. Depending on this eleventh information I11, speed controllers P2 determine and generate operating setpoints OS_i, which are, e.g. torque setpoints. Drive control modules C convert the torque setpoints OS_i into actual electric signals with which the drives di are operated so that the drives di bring the carrier 4 to the position setpoint P_n. Since the position setpoint P_n follows the determined trajectory T_t, T_s, also the carrier follows the determined trajectory T_t, T_s. The drive control modules C are explained in more detail in connection with figure 13.

The first information I1 is representative of the actual position P_a of the carrier 4 and can be determined, for example, with the help of the incremental encoder 23 as described in connection with figure 3. The first information I1 and the seventh information I7 are used in a negative feedback loop. From the deviation between the actual position P_a and the position setpoint P_n, the position controller P1 determines the eleventh information I11.

Moreover, in order to achieve that the drives di rotate with the rotational speed setpoints R_n,i, twelfth information I12 is provided which is representative of the actual rotational speeds R_a,i of the drives di. The twelfth information I12 can be determined with the help of the incremental encoders 24, as explained in connection with figure 3. The twelfth information I12 is used together with the eleventh information I11 in negative feedback loops in order to minimize the respective differences between the rotational speed setpoints R_n,i and the actual rotational speeds R_a,i. The speed controllers P2 determine the operating setpoints OS_i depending on the deviation between the actual rotational speeds R_a,i and the rotational speed setpoints R_n,i.

As mentioned before, the drives d1, d2 may be operated such that they exert different torques. For this purpose, ninth information I9 is provided which is representative of a torque difference setpoint ΔM_n. The torque difference setpoint ΔM_n is compared to the actual torque difference ΔM_a between the actual torques M_a,i of the drives di. The actual torque difference ΔM_a can be derived from eighth information I8 which is representative of the actual torques M_a,i of the drives di. The actual torques M_a,i of the drives di can be extracted from drive control modules C used for operating the drives by using the electric signals with which the motors are actually operated.

Depending on the eighth I8 and ninth I9 information, tenth information I10 is determined using a negative feedback loop. The tenth information I10 is representative of an offset rotational speed ΔR_n and is determined with the help of a tension controller P4 depending on the deviation between the actual torque difference and the torque difference setpoint ΔM_n. For example, the offset rotational speed ΔR_n is determined such that it increases with increasing difference between the torque difference setpoint ΔM_n and the actual torque difference ΔM_a.

As can be seen in figure 12, the offset rotational speed ΔR_n is subtracted from the rotational speed setpoint R_n,1 determined for drive d1 and the resulting value of the rotational speed is used as the rotational speed setpoint R_n,2 for the drive d2. In this way, a torque difference can be realized between drive d1 and drive d2 in which the value of the torque exerted by the drive d2 is always smaller or at most equal to the value of the torque exerted by drive d1.

In figure 12, a first operation mode is executed in which the carrier 4 will follow the determined target trajectory T_t or shortest trajectory T_s. However, the control system is configured such that it can switch into a second operation mode in which the position setpoint P_n is not continuously or repeatedly changed according to any calculated trajectory. Rather, the position setpoint P_n is set to be the desired end position, e.g. the target position P_t, and remains constant until this is reached.

Figure 13 illustrates the operation of a drive control module C. A current converter PC1 determines a current setpoint I_n,i depending on the operating setpoint OS_i, which is the torque setpoint in this example. A further controller PC2 (e.g. a PI-controller) determines an absolute voltage value U and a phase shift ϕ depending on the current setpoint I_n,i and the actual current I_a,i. PWM-generators PWMG generate corresponding PWM signals with which IGBTs (not shown) are energized. The output thereof is three different phases u, v, w with which the drives di are then operated. Moreover, a motor model MM determines, depending on phases u, v, w, the actual current I_a,i. The actual current I_a,i and the current setpoint I_n,i are used in a negative feedback loop to adapt the voltage value U and the phase shift ϕ. Furthermore, the eighth information I8 is determined depending on the determined actual current I_a,i.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

Reference sign list:

| 1 | first rotor blade |
| 2 | second rotor blade |
| 3 | third rotor blade |
| 4 | nacelle carrier |
| 10 | rotor |
| 11 | electric motor |
| 12 | gearbox |

| | |
|---|---|
| 13 | pinion |
| 20 | tower |
| 22 | yaw bearing |
| 23 | incremental encoder |
| 24 | incremental encoder |
| 30 | control system |
| 40 | nacelle |
| 100 | wind turbine |
| 104 | foundation |
| 112 | rotor hub |

| | |
|---|---|
| I1 | first information |
| I2 | second information |
| I3 | third information |
| I4 | fourth information |
| is | fifth information |
| I6 | sixth information |
| I7 | seventh information |
| I8 | eighth information |
| I9 | ninth information |
| I10 | tenth information |
| I11 | eleventh information |
| I12 | twelfth information |
| $T\_t$ | target trajectory |
| $T\_s$ | shortest trajectory |
| $v\_{max}$ | maximum allowed velocity |
| $a\_{max}$ | maximum allowed acceleration |
| $j\_{max}$ | maximum allowed jerk |
| t1 to t7 | time interval |
| t | time |

| | |
|---|---|
| $OS\_i$ | operating setpoint |
| di | drive |
| $P\_t$ | target position |
| $P\_n$ | position setpoint |
| $P\_a$ | actual position |
| $\Delta M\_n$ | torque difference setpoint |
| $\Delta M\_a$ | actual torque difference |
| $R\_{n,i}$ | rotational speed setpoint |
| $R\_{a,i}$ | actual rotational speed |
| $M\_{a,i}$ | actual torque |
| $\Delta R\_n$ | rotational speed offset |
| P1 | position controller |
| P2 | speed controller |
| P4 | tension controller |

| | |
|---|---|
| C | motor control module |
| PC1 | current converter |
| PC2 | further controller |
| U | absolute voltage |
| $\Phi$ | phase shift |
| $I\_{n,i}$ | current setpoint |
| $I\_{a,i}$ | actual current |
| PWMG | PWM generator |
| u, v, w | phases |
| MM | motor model |

**Claims**

1. Method for operating a wind turbine (100) with a rotatable component (1 to 4) and at least one drive (di) for rotating the rotatable component (1 to 4) by exerting torque, wherein the method comprises

   - providing first information (I1) which is representative of the actual position ($P\_a$) of the rotatable component (1 to 4) ;
   - providing second information (I2) which is representative of a target position ($P\_t$) of the rotatable component (1 to 4) ;
   - determining third information (I3) depending on the first (I1) and the second (I2) information which is representative of a target trajectory ($T\_t$) for the rotation of the rotatable component (1 to 4) from the actual position ($P\_a$) to the target position ($P\_t$) using a trajectory generator;
   - determining an operating setpoint ($OS\_i$) for the at least one drive (di) depending on the third information (I3)

   - such that, when the at least one drive (di) is operated according to the operating setpoint ($OS\_i$), the drive (di) exerts torque onto the rotatable component (1 to 4) so that it starts to follow the determined target trajectory ($T\_t$).

2. Method according to claim 1, wherein

   - the trajectory generator is a polynomial point-to-point trajectory generator.

3. Method according to claim 2, wherein

   - the trajectory generator is of at least third order
   - the trajectory generator uses constraints for the maximum allowed speed ($v\_{max}$), the maximum allowed rotational acceleration ($a\_{max}$) and the maximum allowed jerk ($j\_{max}$).

4. Method according to claim 3, wherein

   - the target position ($P\_t$) is a position sufficiently far away from the actual position ($P\_a$) of the rotatable component (1 to 4) that the determined target trajectory ($T\_t$) reaches the maximum allowed speed ($v\_{max}$) defined in the trajectory generator within the target trajectory.

5. Method according to any one of the preceding claims, wherein the method further comprises

   - providing fourth information (I4) which is representative of a stop command ($S\_{stop}$);
   - determining fifth information (I5) depending on the fourth information (I4), wherein the fifth information (I5) is representative of the shortest trajectory (T_s) for the rotation of the rotatable component (1 to 4) from its actual position (P_a) at the moment of provision of the fourth information (I4) to standstill using a trajectory generator;
- newly determining the operating setpoint (OS_i) for the at least one drive (di) depending on the fifth information (I5)

    - such that, when the at least one drive (di) is operated according to the newly determined operating setpoint (OS_i), the drive (di) exerts torque onto the rotatable component (1 to 4) so that it starts to follow the determined shortest trajectory (T_s).

**6.** Method according to any one of the preceding claims, wherein

    - the rotatable component (1 to 4) is a component (4) of a yaw system of the wind turbine (100),
    - the first information (I1) is provided repeatedly or continuously,
    - the method further comprises
    - providing sixth information (I6) which is representative of the actual wind direction at the wind turbine (100);

wherein

    - the steps of providing the second information (I2) and determining the third information (I3) as well as determining the operating setpoint (OS_i) are started depending on a comparison between the first information (I1) and the sixth information (I6) which reveals that the position of the rotatable component (4) is not compatible with the wind direction.

**7.** Method according to claim 6, wherein

    - the steps of providing the fourth information (I4) and determining the fifth information (I5) as well as newly determining the operating setpoint (OS_i) are started depending on a comparison of the first (I1) and the sixth (I6) information which reveals that the position of the rotatable component (4) is compatible with the wind direction.

**8.** Method according to any one of the preceding claims, wherein

    - the first information (I1) is provided repeatedly or continuously,
    - the method further comprises

    - providing seventh information (I7) which is representative of a position setpoint (P_n) of the rotatable component (1 to 4), wherein
    - the operating setpoint (OS_i) is determined also depending on the seventh information (I7) by using a feedback loop with the first (I1) and the seventh (I7) information as input information so that the difference between the actual position (P_a) and the position setpoint (P_n) is minimized,
    - the position setpoint (P_n) is repeatedly or continuously changed according to the determined target trajectory (T_t).

**9.** Method according to claim 8, wherein

    - gain control with at least a contribution of proportional gain control is used for the minimization of the difference between the actual position (P_a) and the position setpoint (P_n).

**10.** Method according to claim 9, further comprising

    - switching from the first operation mode in which the operating setpoint (OS_i) is determined depending on the third information (I3) into a second operation mode in which the operating setpoint (OS_i) is determined directly from the first (I1) and second (I2) information using the gain control.

**11.** Computer program comprising instructions which, when the program is executed by a control system, cause the control system to carry out the method of any one of claims 1 to 10.

**12.** Computer-readable data carrier having the computer program of claim 11 stored thereon.

**13.** Control system (30) comprising means for executing the method according to any one of claims 1 to 10.

**14.** Control system (30) according to claim 13, wherein

    - the control system comprises means (24, 24) with the help of which the actual position (P_a) of the rotatable component (4) is determinable.

**15.** Wind turbine (100) comprising

    - at least one rotatable component (1 to 4),
    - at least one drive (di) for rotating the rotatable component (1 to 4) by exerting torque,
    - the control system (30) according to claim 13 or 14, wherein
    - the control system (30) is signally connected to the at least one drive (di) in order to enable an operation of the drive (di) according to the oper-

ating setpoint (OS_i).

Fig. 1

Fig. 2

Fig. 3

Fig. 4

d1

4

d2

22

30

OS_1, OS_2,
OS_5, OS_6,
OS_3, OS_4

d5

d6

d3

d4

Fig. 5

I1(P_a)

I2(P_t)

I3(T_t)

OS_i

Fig. 6

Fig. 7

```
        ┌──────────┐   ┌──────────┐
        │    I6    │   │  I1(P_a) │
        └────┬─────┘   └────┬─────┘
             └──────┬───────┘
                    ▼
            ┌──────────────┐
            │   I2(P_t)    │
            └──────┬───────┘
                   ▼
            ┌──────────────┐
            │   I3(T_t)    │
            └──────┬───────┘
                   ▼
            ┌──────────────┐
            │    OS_i      │
            └──────┬───────┘
                   └──────────┐
   ┌──────────┐   ┌───────────▼──┐
   │    I6    │   │   I1(P_a)    │──┐
   └────┬─────┘   └──────┬───────┘  │
        └────────┬───────┘          │
                 ▼                  │
          ┌──────────────┐          │
          │  I4(S_stop)  │          │
          └──────┬───────┘          │
                 ▼                  │
          ┌──────────────┐          │
          │   I5(T_s)    │◄─────────┘
          └──────┬───────┘
                 ▼
          ┌──────────────┐
          │    OS_i      │
          └──────────────┘
```

Fig. 8

Fig. 9

Fig. 10

Fig. 11

Fig. 12

Fig. 13

## EUROPEAN SEARCH REPORT

Application Number

EP 23 38 3228

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 746 576 B1 (GEN ELECTRIC [US]) 4 November 2020 (2020-11-04) * paragraphs [0029] - [0039], [0053] - [0063]; figure 5 * | 1-5,8-15 | INV. F03D7/02 F03D7/04 |
| X | CN 114 263 565 A (XINJIANG JINFENG SCIENCE & TECH CO LTD) 1 April 2022 (2022-04-01) * the whole document * | 1-15 | |
| A | US 2020/072192 A1 (MELI TIWA WILLIAM [DE] ET AL) 5 March 2020 (2020-03-05) * paragraphs [0024] - [0038], [0082] - [0116] * | 1-15 | |
| A | US 2016/258416 A1 (HAMMERUM KELD [DK]) 8 September 2016 (2016-09-08) * the whole document * | 1-15 | |

TECHNICAL FIELDS SEARCHED (IPC)

F03D

The present search report has been drawn up for all claims

| Place of search | Date of completion of the search | Examiner |
|---|---|---|
| The Hague | 29 August 2024 | Libeaut, Laurent |

EPO FORM 1503 03.82 (P04C01)

## ANNEX TO THE EUROPEAN SEARCH REPORT
## ON EUROPEAN PATENT APPLICATION NO.

EP 23 38 3228

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2024

| Patent document cited in search report | | Publication date | Patent family member(s) | | Publication date |
|---|---|---|---|---|---|
| EP 2746576 | B1 | 04-11-2020 | DK | 2746576 T3 | 08-02-2021 |
| | | | EP | 2746576 A2 | 25-06-2014 |
| | | | ES | 2848211 T3 | 05-08-2021 |
| | | | US | 2014178195 A1 | 26-06-2014 |
| CN 114263565 | A | 01-04-2022 | NONE | | |
| US 2020072192 | A1 | 05-03-2020 | BR | 112019009745 A2 | 13-08-2019 |
| | | | CA | 3025881 A1 | 28-06-2018 |
| | | | CN | 110088461 A | 02-08-2019 |
| | | | DE | 102016125045 A1 | 21-06-2018 |
| | | | EP | 3559446 A1 | 30-10-2019 |
| | | | JP | 2020502419 A | 23-01-2020 |
| | | | KR | 20190085117 A | 17-07-2019 |
| | | | US | 2020072192 A1 | 05-03-2020 |
| | | | WO | 2018114923 A1 | 28-06-2018 |
| US 2016258416 | A1 | 08-09-2016 | CN | 105683563 A | 15-06-2016 |
| | | | EP | 3019743 A1 | 18-05-2016 |
| | | | ES | 2670516 T3 | 30-05-2018 |
| | | | US | 2016258416 A1 | 08-09-2016 |
| | | | WO | 2015003710 A1 | 15-01-2015 |

EPO FORM P0459

For more details about this annex : see Official Journal of the European Patent Office, No. 12/82